# EUROPÄISCHE PATENTSCHRIFT

(11) **EP 1 355 805 B1**
(45) Veröffentlichungstag und Bekanntmachung des Hinweises auf die Patenterteilung: **27.07.2005**
(21) Anmeldenummer: 01271806.0
(22) Anmeldetag: 22.11.2001
(51) Int. Cl.: B60R 21/01

(54) **VERFAHREN ZUM AUSLÖSEN VON RÜCKHALTEMITTELN IN EINEM KRAFTFAHRZEUG**
METHOD FOR TRIGGERING MEANS OF RESTRAINT IN A MOTOR VEHICLE
PROCEDE POUR DECLENCHER DES MOYENS DE RETENUE DANS UN VEHICULE A MOTEUR

(30) Priorität: 28.12.2000 DE 10065518
(43) Veröffentlichungstag der Anmeldung: 29.10.2003
(73) Patentinhaber: ROBERT BOSCH GMBH, 70442 Stuttgart (DE)
(72) Erfinder: ROELLEKE, Michael, 71229 Leonberg-Hoefingen (DE)
(86) Internationale Anmeldenummer: PCT/DE2001/004408
(87) Internationale Veröffentlichungsnummer: WO 2002/053419

(56) Entgegenhaltungen:
- WO-A-90/09298
- US-A- 5 835 007
- PATENT ABSTRACTS OF JAPAN vol. 1999, no. 14, 22. Dezember 1999 (1999-12-22) -& JP 11 255060 A (KANSEI CORP), 21. September 1999 (1999-09-21) -& US 6 305 709 B1 (KANSEI CORP) 23. Oktober 2001 (2001-10-23)

## Beschreibung

### Stand der Technik

Die Erfindung betrifft ein Verfahren zum Auslösen von Rückhaltemitteln in einem Kraftfahrzeug im Falle eines Aufpralls bzw. einer Kollision mit einem Objekt. Das Verfahren bezieht sich in erster Linie auf das Auslösen von nicht reversiblen Rückhaltemitteln, wie z.B. pyrotechnischen Gurtstraffern und Airbags. Dazu wird der zeitliche Verlauf der Beschleunigung in Form mindestens eines Beschleunigungssignals erfasst. Aus dem Beschleunigungssignal wird dann der zeitliche Verlauf einer Geschwindigkeit generiert. Als Auslösekriterium wird ein Schwellwert für die Geschwindigkeit bestimmt.

Die aus der Praxis bekannten Airbag-Steuergeräte messen bei einem Unfall die Beschleunigung in der Fahrgastzelle und bestimmen aufgrund dieser Beschleunigung, wann Rückhaltemittel, wie Gurtstraffer und Airbags, ausgelöst werden müssen.

JP 11 255060 A (siehe ebenfalls US 6 305 709 B) offenbart ein Verfahren gemäss dem Oberbegriff des Anspruchs 1.

In der EP 0 458 796 B1 wird ein Verfahren der eingangs genannten Art zum Auslösen von Rückhaltemitteln bei einem Sicherungssystem für Fahrzeuginsassen beschrieben, bei dem ein Beschleunigungssignal mit Hilfe eines geeigneten Beschleunigungsaufnehmers erfasst wird. Durch zeitliche Integration ggf. in Verbindung mit einer geeigneten Wichtung wird dieses Beschleunigungssignal in eine Geschwindigkeit umgewandelt. Als Auslösekriterium dient ein Schwellwert für die Geschwindigkeit. Bei dem aus der EP 0 458 796 B1 bekannten Verfahren wird der Schwellwert in Abhängigkeit von einer oder mehreren Zustandsgrößen oder von zeitlich zurückliegenden Zustandsgrößen des Kraftfahrzeugs bestimmt. Als Zustandsgröße kommen beispielsweise das Beschleunigungssignal selbst, ein daraus abgeleitetes Signal, wie die Geschwindigkeit, oder auch die im Crash ablaufende Zeit in Frage.

In jedem Fall wird der Schwellwert im Rahmen des bekannten Verfahrens so gewählt, dass er ein sicheres und zuverlässiges Auslösen der erforderlichen Rückhaltemittel in allen in Betracht kommenden Aufprallsituationen gewährleistet, unabhängig von der Art des Kollisionspartners und der Aufprallgeschwindigkeit, d.h. der Relativgeschwindigkeit zwischen dem Kraftfahrzeug und dem Kollisionspartner. Eine dynamische Anpassung des Schwellwerts an die konkrete Aufprallsituation ist hier nicht möglich, da hier weder eine geeignete Sensorik noch eine entsprechende Signalauswertung vorgesehen ist.

### Vorteile der Erfindung

Mit der vorliegenden Erfindung wird ein Verfahren vorgeschlagen, bei dem das Auslösen von Rückhaltemitteln, wie z.B. Airbags und Gurtstraffern, besser an die konkrete Aufprallsituation angepasst ist und insbesondere ein unnötiges Auslösen von Rückhaltemitteln vermieden werden kann.

Dies wird erfindungsgemäß durch die Merkmale des Anspruchs 1 erreicht.

Erfindungsgemäß ist zunächst erkannt worden, dass die aus dem Stand der Technik bekannten "Single-Point-Sensing-Systeme" in sinnvoller Weise durch eine im Kraftfahrzeug einzubauende Precrash-Sensorik erweiterbar sind, um vorausschauend mögliche Kollisionspartner in der Umgebung des Fahrzeugs zu erkennen. Mit Hilfe der Precrash-Sensorik lassen sich die Aufprallgeschwindigkeit (Closing Velocity v_{close}) und der Aufprallzeitpunkt (t₀), d.h. die Zeitdifferenz bis zum Aufprall auf das Objekt, ermitteln. Umfasst die Precrash-Sensorik mindestes zwei in geeigneter Weise angeordnete Precrash-Sensoren, so lässt sich mittels eines Triangulierungsverfahrens zusätzlich auch der Offset, d.h. die Aufprallstelle und der Aufprallwinkel, bestimmen. Im Rahmen der Precrash-Sensierung können beispielsweise Radarmessungen, Infrarotmessungen oder auch optische Messverfahren zum Einsatz kommen.

Desweiteren ist erfindungsgemäß erkannt worden, dass sich die in Betracht kommenden Aufprallsituationen in sinnvoller Weise anhand der Aufprallgeschwindigkeit klassifizieren lassen, da die Aufprallgeschwindigkeit alleine bereits Aussagen über die Crashschwere zulässt, obwohl die optimale Auslösezeit und die maximal benötigten Rückhaltemittel von weiteren Parametern abhängen, wie der Art des Aufpralls, dem Massenverhältnis der Kollisionspartner und dem Verhältnis der Steifigkeiten der Kollisionspartner. Die erfindungsgemäße Klassifizierung der Aufprallsituation anhand der Aufprallgeschwindigkeit ermöglicht des weiteren eine Eingrenzung der zu ermittelnden Auslösezeit auf ein Auslösezeitfenster [t_{A}...t_{B}]. Dadurch wird die Möglichkeit geschaffen, in die Bestimmung des Schwellwerts auch Informationen über den Crashverlauf nach dem Aufprallzeitpunkt t₀ bis zum Beginn t_{A} des Auslösezeitfensters [t_{A}...t_{B}] einfließen zu lassen. Außerdem kann die Generierung des zeitlichen Verlaufs der Geschwindigkeit aus dem Beschleunigungssignal nun auf das Auslösezeitfenster beschränkt werden.

Erfindungsgemäß ist schließlich noch erkannt worden, dass es sinnvoll ist, die konkrete Aufprallsituation bei der Bestimmung des Schwellwerts aus dem Beschleunigungssignal zu berücksichtigen, da beispielsweise höhere Aufprallgeschwindigkeiten ein sensibleres Auslösen der Rückhaltemittel erfordern als niedrige Aufprallgeschwindigkeiten. Deshalb wird erfindungsgemäß auch bei der Ermittlung des Schwellwerts die Klassifizierung der Aufprallsituation berücksichtigt.

In einer vorteilhaften Ausgestaltung des erfindungsgemäßen Verfahrens werden mit Hilfe der Klassifizierung der konkreten Aufprallsituation auch die in dieser Aufprallsituation maximal benötigten Rückhaltemittel bestimmt.

Grundsätzlich gibt es verschiedene Möglichkeiten für die Klassifizierung der Aufprallsituationen anhand der Aufprallgeschwindigkeit. In einer vorteilhaften Variante für zweistufige Rückhaltemittel werden Geschwindigkeitscluster in Form von Geschwindigkeitsbereichen für die Aufprallgeschwindigkeit gebildet, wobei die Clustergrenzen entsprechend der jeweils maximal erforderlichen Rückhaltemittel gewählt sind. In diesem Fall sind die Geschwindigkeitscluster definiert als die Geschwindigkeitsbereiche, in denen für alle in Betracht kommenden Aufprallsituationen
- entweder kein Rückhaltemittel erforderlich ist (Cluster C0)
- oder im nicht gegurteten Zustand (unbelted) für einen Teil der in Frage kommenden Aufprallsituationen die erste Stufe der Rückhaltemittel erforderlich ist, während im gegurteten Zustand noch kein Rückhaltemittel erforderlich ist (Cluster C1),
- oder im gegurteten Zustand (belted) für einen Teil der in Frage kommenden Aufprallsituationen die erste Stufe der Rückhaltemittel erforderlich ist, während die zweite Stufe der Rückhaltemittel weder im nicht gegurteten Zustand noch im gegurteten Zustand erforderlich ist (Cluster C2),
- oder im nicht gegurteten Zustand für einen Teil der in Frage kommenden Aufprallsituationen die erste und zweite Stufe der Rückhaltemittel erforderlich ist, während die zweite Stufe der Rückhaltemittel im gegurteten Zustand nicht erforderlich ist (Cluster C3),
- oder sowohl im nicht gegurteten Zustand als auch im gegurteten Zustand für einen Teil der in Frage kommenden Aufprallsituationen die erste und zweite Stufe der Rückhaltemittel erforderlich ist (Cluster C4).
Im Rahmen der Klassifizierung einer konkreten Aufprallsituation wird die entsprechende Aufprallgeschwindigkeit einem dieser Geschwindigkeitscluster zugeordnet. Die maximal erforderlichen Rückhaltemittel lassen sich dann einfach aufgrund der Klassifizierung der Aufprallsituation bzw. der Zuordnung zu dem entsprechenden Geschwindigkeitscluster bestimmen.

Die voranstehend erläuterte Klassifizierung der Aufprallsituationen erweist sich auch deshalb als vorteilhaft, weil das Auslösezeitfenster für eine bestimmte Aufprallsituation einfach mit Hilfe der Geschwindigkeitswerte ermittelt werden kann, die die Clustergrenzen des der entsprechenden Aufprallgeschwindigkeit zugeordneten Geschwindigkeitsclusters bilden.

Im Rahmen des erfindungsgemäßen Verfahrens wird aus dem Beschleunigungssignal der zeitliche Verlauf einer Geschwindigkeit generiert. Auch hierfür gibt es grundsätzlich verschiedene Möglichkeiten. In einer einfachsten Variante wird das Beschleunigungssignal lediglich zeitlich integriert. Das daraus resultierende Arbeitssignal kann dann noch mit einer geeigneten Wichtungsfunktion gewichtet werden. Das Beschleunigungssignal kann allerdings auch zunächst gewichtet werden, um anschließend das daraus resultierende Arbeitssignal zeitlich zu integrieren. Schließlich ist es auch möglich, zwei Wichtungen vorzunehmen, nämlich eine erste Wichtung vor der zeitlichen Integration und eine zweite Wichtung nach der zeitlichen Integration.

Wie bereits erwähnt, wird erfindungsgemäß auch bei der Ermittlung des Schwellwerts die Klassifizierung der Aufprallsituation berücksichtigt. In einer Variante des erfindungsgemäßen Verfahrens wird das Beschleunigungssignal zur Ermittlung des Schwellwerts gefiltert und/oder transformiert, wobei die Transformation vor oder nach der Filterung erfolgen kann. Hierbei erweist es sich als vorteilhaft, wenn zumindest ein Teil der Filterparameter und/oder der Transformationsparameter in Abhängigkeit von der jeweiligen Klassifizierung der Aufprallsituation bestimmt wird, um der konkreten Aufprallsituation Rechnung zu tragen.

In einer besonders vorteilhaften Weiterbildung des erfindungsgemäßen Verfahrens wird das Objekt, d.h. der Kollisionspartner, hinsichtlich seiner Masse und seiner Steifigkeit durch Auswertung des zeitlichen Verlaufs der Beschleunigung nach dem Aufprallzeitpunkt klassifiziert. Diese Objektklassifizierung kann dann ebenfalls bei der Bestimmung des Schwellwerts berücksichtigt werden, was zusätzlich zu einer genaueren Bestimmung der Auslösezeit und der maximal benötigten Rückhaltemittel beiträgt.

Zur Objektklassifizierung kann zum einen die Interaktion des Kraftfahrzeugs mit dem Objekt zu Beginn des Aufpralls in Abhängigkeit von der Klassifizierung der Aufprallsituation ausgewertet werden. In diesem Zusammenhang erweist es sich als vorteilhaft, eine Kurzzeitintegration des Beschleunigungssignals nach dem Aufprallzeitpunkt durchzuführen und auszuwerten, um starker Signalspitzen zu Beginn des Aufpralls zu erfassen, und/oder den Signalanstieg nach dem Aufprallzeitpunkt auszuwerten.

Zum anderen können zur Objektklassifizierung Bruchvorgänge im Kraftfahrzeug und Änderungen der Barrierenhärte im Verlauf des Aufpralls über hochfrequente Schwingungen im Beschleunigungssignal erfasst werden und in Abhängigkeit von der Klassifizierung der Aufprallsituation ausgewertet werden. Die hochfrequenten Schwingungen im Beschleunigungssignal lassen sich einfach mit Hilfe eines Hochpassfilters erfassen. Die Auswertung kann dann über Spitzenwerte erfolgen.

In einer weiteren vorteilhaften Ausgestaltung des erfindungsgemäßen Verfahrens wird das Beschleunigungssignal zusätzlich auch vor dem eigentlichen Aufprall bis zum Aufprallzeitpunkt ausgewertet, um eine etwaige Vorverlagerung der Fahrzeuginsassen bzw. eine sogenannte "Out-of-position"-Situation vor dem Aufprall zu erkennen und bei der Auslösung der Rückhaltemittel zu berücksichtigen. Entsprechende Informationen können durch zweifache Integration des Beschleunigungssignals gewonnen werden und mit weiteren Insassenparametern, wie der Sitzposition, der Lenkradeinstellung und/oder dem Insassengewicht, kombiniert werden.

### Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnungen verwiesen.
- Fig. 1: zeigt eine Aufteilung des Wertebereichs der Aufprallgeschwindigkeit (v_{close}-Achse) in Geschwindigkeitscluster (C0 bis C4) mit typischen Auslöseanforderungen für einen zweistufigen Airbag bei unterschiedlichen Crashtypen (y-Achse),
- Fig. 2: zeigt den zeitlichen Verlauf der Beschleunigung a im Falle einer Kollision bei Precrash-Sensierung,
- Fig. 3: zeigt den zeitlichen Verlauf dreier Beschleunigungssignale und der daraus generierten Geschwindigkeitssignale bei gleicher Aufprallgeschwindigkeit aber unterschiedlicher Crashschwere und
- Fig. 4: den Ablauf einer Variante des erfindungsgemäßen Verfahrens in Form eines Blockschaltbildes.

### Beschreibung des Ausführungsbeispiels

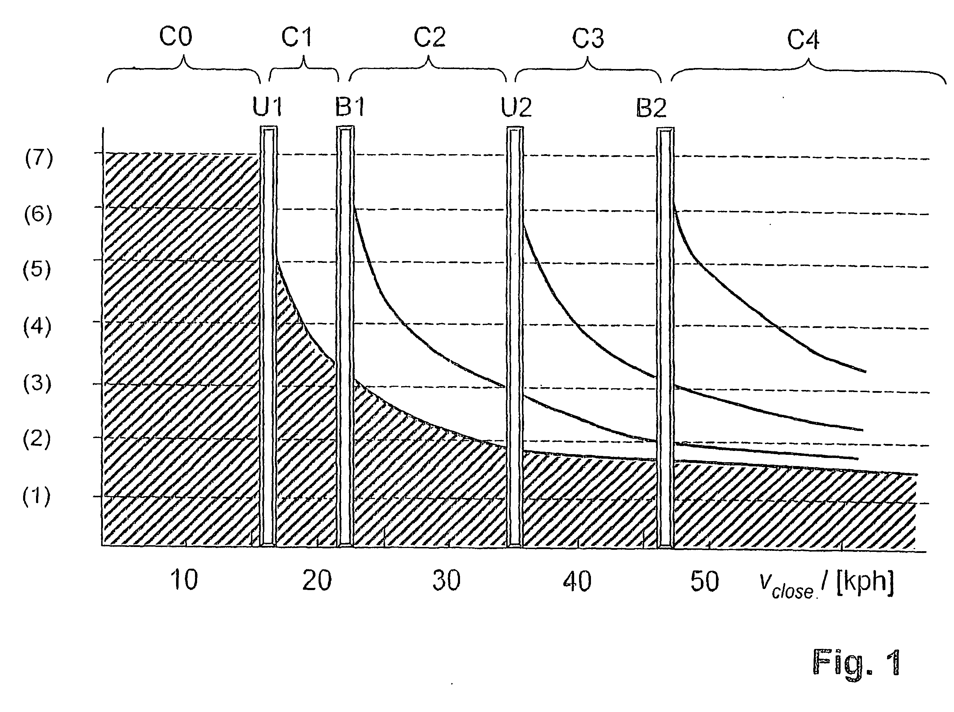

Im Rahmen des erfindungsgemäßen Verfahrens zum Auslösen von Rückhaltemitteln in einem Kraftfahrzeug werden schon vor einem etwaigen Aufprall bzw. einer Kollision mit einem Objekt der Aufprallzeitpunkt und die Aufprallgeschwindigkeit, d.h. die Relativgeschwindigkeit zwischen Kraftfahrzeug und Kollisionspartner mit Hilfe einer entsprechenden Precrash-Sensorik ermittelt. Auf der Grundlage der so bestimmten Aufprallgeschwindigkeit wird dann die Aufprallsituation klassifiziert. Diese Klassifizierung der Aufprallsituation wird nachfolgend anhand von Fig. 1 für den Fall von zweistufigen Rückhaltemitteln näher erläutert.

Die x-Achse des in Fig. 1 dargestellten Diagramms gibt den Wertebereich der möglichen Aufprallgeschwindigkeiten v_{close} wieder. Im hier dargestellten Fall ist der Wertebereich in vier verschiedene Geschwindigkeitsbereiche aufgeteilt, die die sogenannten Geschwindigkeitscluster C0 bis C4 bilden. Die Clustergrenzen sind hier so gewählt, dass mit zunehmender Aufprallgeschwindigkeit bei jeder Clustergrenze ein weiteres Rückhaltemittel bzw. eine weitere Stufe eines Rückhaltemittels als maximal erforderliches Rückhaltemittel hinzukommt. Die y-Achse des Diagramms gibt eine Skala von Crashtypen wieder, deren Stärke von unten nach oben zunimmt. Darin sind von unten nach oben die folgenden Crashtypen aufgeführt: (1) Situationen, die kein Auslösen erfordern (misuses), (2) seitlicher Zusammenstoß mit einem anderen Fahrzeug (car to car side), (3) Unterfahrung eines LKW-Trailors (truck underride), (4) Zusammenstoß mit einem entgegenkommenden Fahrzeug bei Überholmanöver mit einer Überdeckung von 40% (offset crash deformable barrier), (5) Zusammenstoß mit einem Baum oder Pfahl (pole), (6) Aufprall auf ein starres Hindernis in einem Winkel von 30° (angular crash rigid barrier) und (7) frontaler Aufprall auf ein starres Hindernis (rigid barrier 0°). Der Cluster C0 ist als der Geschwindigkeitsbereich definiert, in dem für alle in der y-Achse des Diagramms aufgeführten Aufprallsituationen keine Airbagauslösung erforderlich ist. Dieser Bereich ist straffiert dargestellt. Im Geschwindigkeitsbereich des Clusters C1 ist im nicht gegurteten Zustand (unbelted) für einen Teil der in Frage kommenden Aufprallsituationen die erste Stufe der Rückhaltemittel erforderlich, während im gegurteten (belted) Zustand noch kein Rückhaltemittel erforderlich ist. Dies wird durch die Kurve U1 verdeutlicht, die den straffierten Bereich von dem nicht straffierten Bereich trennt. Im Geschwindigkeitsbereich des Clusters C2 ist im gegurteten Zustand für einen Teil der in Frage kommenden Aufprallsituationen die erste Stufe der Rückhaltemittel erforderlich, während die zweite Stufe der Rückhaltemittel weder im nicht gegurteten Zustand noch im gegurteten Zustand erforderlich ist, was sich aus der Kurve B1 ergibt. Im Geschwindigkeitsbereich des Clusters C3 ist im nicht gegurteten Zustand für einen Teil der in Frage kommenden Aufprallsituationen die erste und zweite Stufe der Rückhaltemittel erforderlich, während die zweite Stufe der Rückhaltemittel im gegurteten Zustand nicht erforderlich ist. Dies wird durch die Kurve U2 veranschaulicht. Im Geschwindigkeitsbereich des Clusters C4 ist schließlich sowohl im nicht gegurteten Zustand als auch im gegurteten Zustand für einen Teil der in Frage kommenden Aufprallsituationen die erste und zweite Stufe der Rückhaltemittel erforderlich, was durch die Kurve B2 ausgedrückt wird.

Die in Fig. 1 als Balken U1, B1, U2 und B2 dargestellten Clustergrenzen definieren also im vorliegenden Fall gleichzeitig die maximal erforderlichen Rückhaltemittel für eine entsprechend klassifizierte Aufprallsituation.

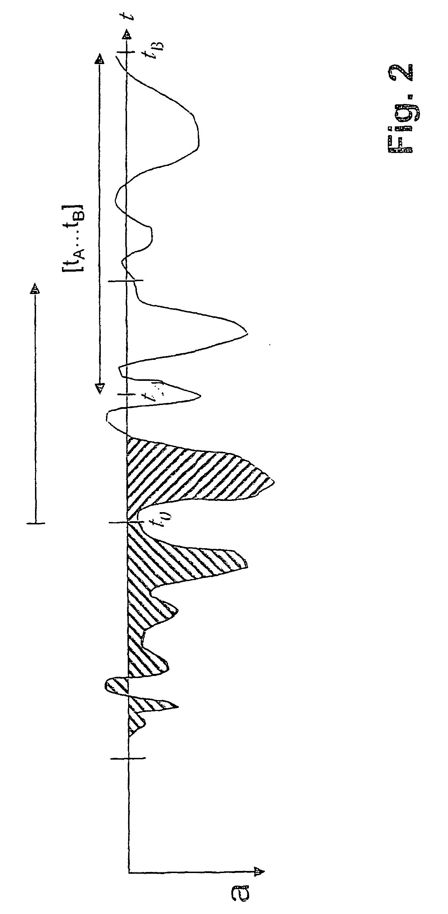

Der in Fig. 2 dargestellte zeitliche Verlauf der Beschleunigung a im Fall einer Kollision kann durch die Informationen der im Rahmen des erfindungsgemäßen Verfahrens eingesetzten Precrash-Sensorik in zwei Bereiche aufgeteilt werden, nämlich den sogenannten Pre-braking-Bereich vor dem eigentlichen Aufprall, d.h. vor dem Aufprallzeitpunkt t₀, und den Crashverlauf ab Berührung mit dem Objekt, d.h. ab dem Aufprallzeitpunkt t₀.

Da im Rahmen des erfindungsgemäßen Verfahrens der Aufprallzeitpunkt t₀ und somit auch die bis zum Aufprall noch verbleibende Zeit bestimmt wird, besteht nun die Möglichkeit, die bis zum Aufprallzeitpunkt t₀ erfassten Beschleunigungsdaten auszuwerten, um eine Aussage über eine etwaige Vorverlagerung bzw. "Out-of-position"-Situation der Fahrzeuginsassen zu machen. So können Pre-braking-Situationen, wie z.B. das Überfahren eines Hindernisses oder ein Bremsmanöver direkt vor dem eigentlichen Crash, nun in ihren Auswirkungen auf die Fahrzeuginsassen erfasst werden. In diesem Zusammenhang erweist sich die Betrachtung einer freien Masse im Kraftfahrzeug in Verbindung mit den nutzbaren Beschleunigungsdaten ab Werten von beispielsweise 3g als ausreichend, da Beschleunigungen dieser Größenordnung Bewegungskorrekturen durch Muskelkraft ausschließen. Die zu erwartende Vorverlagerung der Fahrzeuginsassen vor dem eigentlichen Crash kann einfach durch zweifache Integration des Beschleunigungssignals a bewertet werden. Diese Informationen können ggf. in Verbindung mit weiteren Insasseninformationen, wie z.B. der Sitzposition, der Lenkradstellung, dem Insassengewicht, etc., benutzt werden, um beispielsweise den Abstand eines Insassen vom Lenkrad direkt vor dem Crash zu bestimmen. Je nach Ausmaß der zu erwartenden Vorverlagerung, kann dann beispielsweise die Aggressivität des Airbags verändert werden.

Wie bereits erwähnt, beginnt der eigentliche Crashverlauf ab dem Aufprallzeitpunkt t₀. Anhand der Aufprallgeschwindigkeit v_{close} und der darauf basierenden Zuordnung eines bestimmten Geschwindigkeitsclusters kann ein Auslösezeitfenster [t_{A}...t_{B}] für die jeweilige Aufprallsituation angegeben werden. Dieses Auslösezeitfenster [t_{A}...t_{B}] bestimmt den zeitlichen Arbeitsbereich für die Generierung des zeitlichen Verlaufs einer Geschwindigkeit. Dazu kann das Beschleunigungssignal beispielsweise einfach zeitlich integriert werden. Über die Klassifizierung der Aufprallsituation anhand der Aufprallgeschwindigkeit v_{close} wird auch die Parametrisierung von Funktionen durchgeführt, die zur Bestimmung eines Schwellwerts für die Geschwindigkeit auf das Beschleunigungssignal angewendet werden, wie z.B. eine Filterfunktion und eine Transformation.

Bei Kenntnis des Aufprallzeitpunkts t₀ und unter Berücksichtigung der Aufprallgeschwindigkeit v_{close} bzw. des entsprechenden Geschwindigkeitsclusters kann nun durch Auswertung des zeitlichen Verlaufs der Beschleunigung außerdem auch eine Klassifizierung des Kollisionspartners durchgeführt werden, was nachfolgend näher erläutert wird.

Besonders aussagekräftig ist der Signalverlauf direkt nach dem Aufprallzeitpunkt t₀, der sogenannte "first peak" des Beschleunigungssignals, da beispielsweise bei harten Kollisionspartnern schon bei der ersten Berührung starke Signalspitzen auftreten. Diese können über Kurzzeitintegration des Beschleunigungssignals erfasst werden. In Ergänzung oder alternativ dazu kann auch der erste Signalanstieg des Beschleunigungssignals erfasst werden. Bei der Auswertung des "first peak" wird die Interaktion des Kraftfahrzeugs mit dem Kollisionspartner zu Beginn des Crashs bewertet. Die in Folge ablaufenden Bruchvorgänge im Kraftfahrzeug und Änderungen der Barrierenhärte werden durch hochfrequente Schwingungen im Beschleunigungssignal (Oszillationen) angezeigt. Änderungen der Barrierenhärte treten beispielsweise bei Fahrzeug-Fahrzeug Zusammenstößen auf, da bei einem Kraftfahrzeug hinter dem relativ weichen Vorbau sehr harte Strukturen, wie Längsträger und Motor, angeordnet sind. Die hochfrequenten Schwingungen im Beschleunigungssignal können mittels eines Hochpassfilters erfasst werden und beispielsweise über Spitzenwerte abgefragt werden.

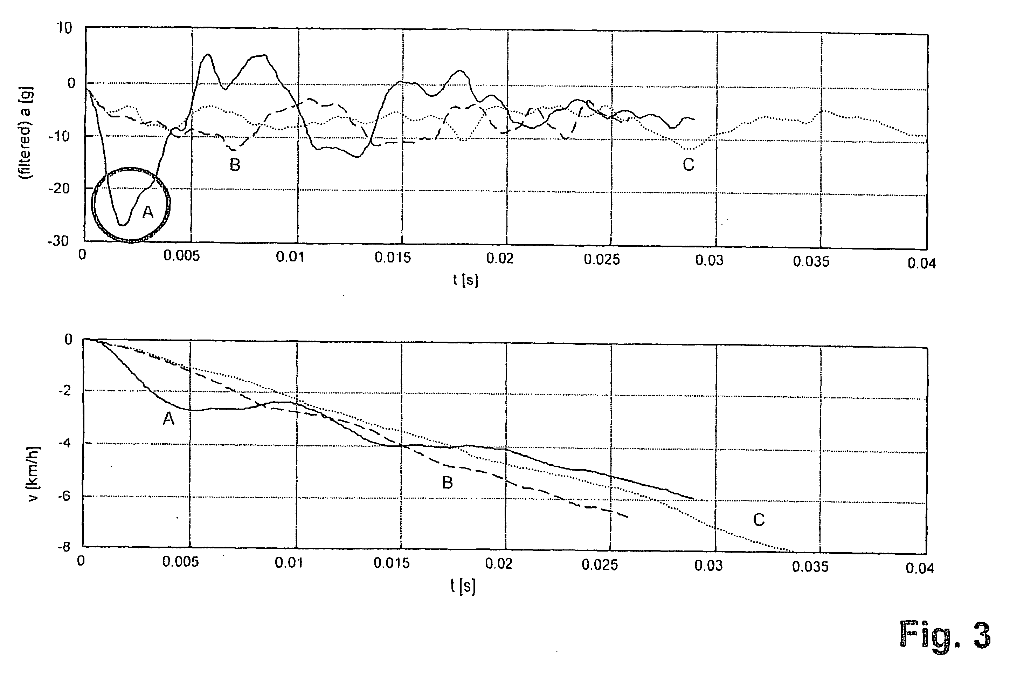

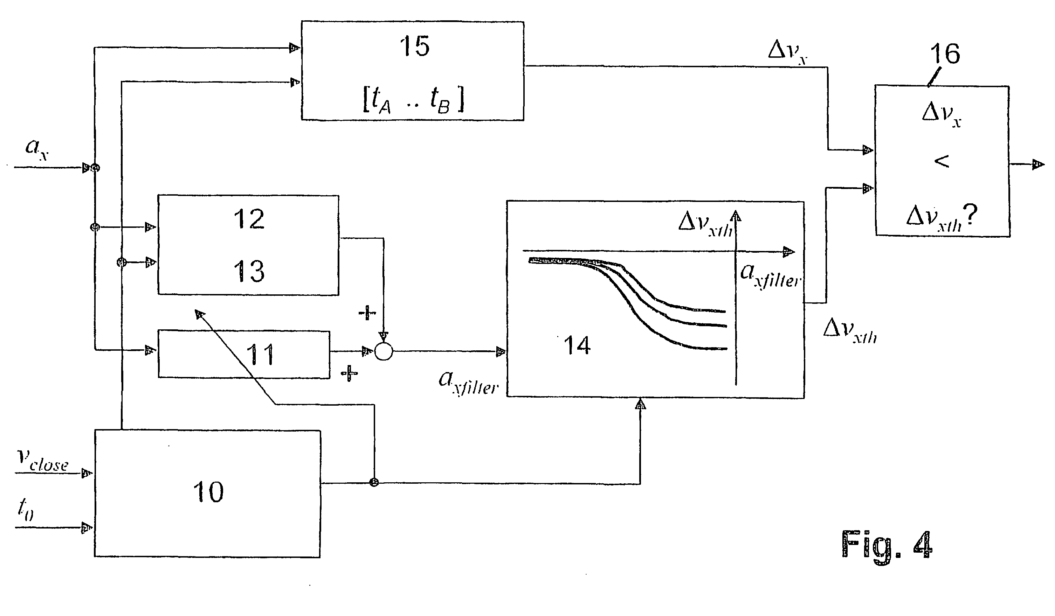

Im oberen Teil der Fig. 3 sind beispielhaft drei reale Beschleunigungssignale A, B und C dargestellt, die drei Crashverläufe mit unterschiedlichen Kollisionspartnern aber bei gleicher Aufprallgeschwindigkeit wiedergeben. Kurve A gibt einen Frontalzusammenstoß im Winkel von 30° wieder. Bei der Kurve B handelt es sich um einen Fahrzeug-Fahrzeug-Zusammenstoß im Winkel von 90°, während die Kurve C einen Zusammenstoß zweier Fahrzeuge im Winkel von 75° beschreibt. Im unteren Teil der Fig. 4 sind die daraus abgeleiteten Geschwindigkeitsverläufe für A, B und C dargestellt. Die Signale sind bis zur geforderten Auslösung bzw. im Falle des Signals C ohne zeitliche Begrenzung dargestellt. Das Beschleunigungssignal A zeigt einen sehr deutlichen Anfangspeak, obwohl das entsprechende Geschwindigkeitssignal im weiteren Verlauf eher schwächer wird. Die drei Beschleunigungssignale A, B und C können mit den voranstehend beschriebenen Funktionen sehr gut hinsichtlich der entsprechenden Kollisionspartner klassifiziert werden.

Wie bereits erwähnt, können im Rahmen des erfindungsgemäßen Verfahrens mehrere Precrash-Sensoren eingesetzt werden, um zusätzlich zum Aufprallzeitpunkt t₀ und der Aufprallgeschwindigkeit v_{close} Informationen über die Objektbewegungsrichtung und die Aufprallzone im Crash, d.h. die Aufprallstelle und den Aufprallwinkel, zu gewinnen. Das Blockschaltbild der Fig. 4 bezieht sich auf eine Variante des erfindungsgemäßen Verfahrens, bei der lediglich ein Precrash-Sensor eingesetzte wird. Eine mögliche Erweiterung auf einen zweiten Precrash-Sensor hat erst einmal keinen direkten Einfluss auf den Auslösealgorithmus. Es kann allerdings ein erweitertes Crashclustering vorgenommen werden, bei dem der Überdeckungsgrad oder der Belastungsgrad der einzelnen Längsträger berücksichtigt werden.

Im Fall des in Fig. 4 dargestellten Ablaufs eines erfindungsgemäßen Verfahrens werden die mit Hilfe der Precrash-Sensorik ermittelte Aufprallgeschwindigkeit v_{close} und die Zeitdifferenz deltaₜ bis zum Aufprall, d.h. bis zum Aufprallzeitpunkt t₀, in einem ASIC im Precrash-Sensor selbst digitalisiert und in geeigneter Weise zu einem zentralen Steuergerät übertragen, wo das sogenannte Precrash Processing 10 stattfindet.

Die Verarbeitung des Beschleunigungssignals im Rahmen des Precrash Processing 10 erfolgt in zwei Abschnitten, wie bereits in Verbindung mit den Figuren 2 und 3 erläutert. Bei den Pre-braking Berechnungen, die in Fig. 4 nicht dargestellt sind, wird die Vorverlagerung mittels zweifacher Integration des Beschleunigungssignals berechnet, so dass sie ggf. beim Auslösen der Rückhaltemittel berücksichtigt werden kann.

Im Rahmen des Precrash Processing 10 wird außerdem die Aufprallsituation, d.h. der Crashverlauf, der mit dem Aufprallzeitpunkt t₀ beginnt, anhand der Aufprallgeschwindigkeit v_{close} klassifiziert. Dazu wird die Aufprallgeschwindigkeit v_{close} einem entsprechenden Geschwindigkeitscluster zugeordnet. Auf der Basis dieser Klassifizierung wird ein Auslösezeitfenster [t_{A}...t_{B}] bestimmt, in dem das Auslösen der maximal erforderlichen Rückhaltemittel erfolgen muss. Außerdem werden die Parameter für die Funktionen Filtering 11, First Peak 12, Oszillation 13 und Transformation 14 berechnet oder wie beispielsweise im Fall der Transformation 14 in Form von entsprechenden Kennlinien abgerufen.

Bei 15 wird der zeitliche Verlauf einer Geschwindigkeit aus dem Beschleunigungssignal aₓ generiert, indem das Beschleunigungssignal aₓ in dem ermittelten Auslösezeitfenster [t_{A}...t_{B}] zeitlich integriert wird. Parallel dazu erfolgt bei 11 die Filterung des Beschleunigungssignals aₓ, bei 12 die Ermittlung und Bewertung des "first peak" und bei 13 die Bewertung der Oszillationen im Beschleunigungssignal aₓ. Durch die zusätzlichen Informationen, die die Funktionen "first peak" 12 und "Oszillationen" 13 liefern, kann die Aufprallsituation besser bewertet werden als durch eine einfache Filterung 11. Deshalb wird der Bestimmung des Schwellwerts Δvₓₜₕ für die Geschwindigkeit Δvₓ die Summe der Funktionen 11 bis 13 a_{xfilter} zugrunde gelegt. Der Schwellwert Δvₓₜₕ wird im Integralpfad über die Transformation 14 generiert. Der direkte Vergleich des Schwellwerts Δvₓₜₕ mit dem bei 15 berechneten Integral Δvₓ erzeugt die Auslöseentscheidung bei 16.

Abschließend sei nochmals darauf hingewiesen, dass das erfindungsgemäße Verfahren darauf abzielt, die zur Verfügung stehenden Informationen aus dem Beschleunigungssignal und einer zusätzlichen Precrash-Sensorik so zu kombinieren, dass ein möglichst robuster, gegen Misuses-Bedingungen unempfindlicher Auslösealgorithmus mit höheren Schwellwerten zur Verfügung steht. Dabei ermöglicht die Precrash-Sensierung eine verbesserte Anpassung des Auslösealgorithmus an die konkrete Crashsituation, indem bei der Bestimmung des Schwellwerts für das Auslösen der Rückhaltemittel die jeweilige Aufprallsituation berücksichtigt wird. Mit Hilfe der Precrash-Sensorik wird außerdem die Sicherheit gegen Fehlauslösungen bei Bagatellunfällen und Misuses erhöht, da alle Fahrmanöver erfasst und klassifiziert werden, so dass die Rückhaltemittel tatsächlich nur bei Kollisionen mit Hindernissen ausgelöst werden.

So können mit Hilfe der Precrash-Sensorik neben dem Aufprallzeitpunkt und der zu erwartenden Aufprallgeschwindigkeit die Auslösezeit und die maximal benötigten Rückhaltemittel in Abhängigkeit von der Crashschwere bestimmt werden, die außerdem auch vom Massenverhältnis und dem Verhältnis der Steifigkeiten der beiden Kollisionspartner abhängig sind. Diese vor dem Aufprall unbekannten Größen können erst im Crashverlauf aus den Beschleunigungsdaten ermittelt werden. Dazu wird der Verlauf des ersten Kollisionspeaks bewertet, der Aussagen über die Steifigkeitsverhältnisse zu Beginn des Crashs erlaubt. Die Stärke der Oszillationen im Beschleunigungssignal bis zur zeitlich letzt möglichen Auslösung der Rückhaltemittel läßt zusätzlich Aussagen über die Härte des Objekts zu. So zeigen beispielsweise geringe Signaloszillationen ein schwaches Brechen der Fahrzeugstruktur an, was auf eine weiche Barriere schließen läßt. Auf diese Weise kann auch der Kollisionspartner hinsichtlich der Massenverhältnisse und der Steifigkeit klassifiziert werden.

## Patentansprüche

1. Verfahren zum Auslösen von Rückhaltemitteln in einem Kraftfahrzeug im Falle eines Aufpralls bzw. einer Kollision mit einem Objekt,
- wobei der zeitliche Verlauf der Beschleunigung in Form mindestens eines Beschleunigungssignals aₓ erfasst wird,
- wobei aus dem Beschleunigungssignal aₓ der zeitliche Verlauf einer Geschwindigkeit Δvₓ generiert wird,
- wobei als Auslösekriterium ein Schwellwert Δvₓₜₕ für die Geschwindigkeit Δvₓ bestimmt wird,
- wobei die Aufprallsituation klassifiziert wird,
- wobei aus dem Beschleunigunssignal aₓ der Schwellwert Δvₓₜₕ für die Geschwindigkeit Δvₓ ermittelt wird, wobei die Klassifizierung der Aufprallsituation berücksichtigt wird,
**dadurch gekennzeichnet,**
- **dass** mit Hilfe einer Precrash-Sensorik schon vor dem Aufprall die Aufprallgeschwindigkeit v_{close} und der Aufprallzeitpunkt t₀ ermittelt werden,
- **dass** die Aufprallsituation anhand der Aufprallgeschwindigkeit v_{close} klassifiziert wird und
- **dass** parallel zur Ermittlung des Schwellwerts Δvₓₜₕ und mit Hilfe der Klassifizierung der Aufprallsituation ein Auslösezeitfenster [t_{A}...t_{B}] bestimmt wird, in welchem der zeitliche Verlauf der Geschwindigkeit Δvₓ generiert wird.

2. Verfahren nach Anspruch 1, **dadurch gekennzeichnet, dass** mit Hilfe der Klassifizierung der Aufprallsituation die maximal benötigten Rückhaltemittel bestimmt werden.

3. Verfahren nach einem der Ansprüche 1 oder 2 für zweistufige Rückhaltemittel, **dadurch gekennzeichnet, dass** die Aufprallgeschwindigkeit v_{close} im Rahmen der Klassifizierung der Aufprallsituation einem sogenannten Geschwindigkeitscluster zugeordnet wird, der als Geschwindigkeitsbereich definiert ist, in dem für alle in Betracht kommenden Aufprallsituationen
- entweder kein Rückhaltemitel erforderlich ist (Cluster C0)
- oder im nicht gegurteten Zustand für einen teil der in Frage kommenden Aufprallsituationen die erste Stufe der Rückhaltemittel erforderlich ist, während im gegurteten Zustand noch kein Rückhaltemittel erforderlich ist (Cluster C1),
- oder im gegurteten Zustand für einen Teil der in Frage kommenden Aufprallsituationen die erste Stufe der Rückhaltemittel erforderlich ist, während die zweite Stufe der Rückhaltemittel weder im nicht gegurteten Zustand noch im gegurteten Zustand erforderlich ist (Cluster C2),
- oder im nicht gegurteten Zustand für einen Teil der in Frage kommenden Aufprallsituationen die erste und zweite Stufe der Rückhaltemittel erforderlich ist, während die zweite Stufe der Rückhaltemittel im gegurteten Zustand nicht erforderlich ist (Cluster C3),
- oder sowohl im nicht gegurteten Zustand als auch im gegurteten Zustand (belted B2) für einen Teil der in Frage kommenden Aufprallsituationen die erste und zweite Stufe der Rückhaltemittel erforderlich ist (Cluster C4).

4. Verfahren nach Anspruch 3, **dadurch gekennzeichnet, dass** das Auslösezeitfenster [t_{A}..t_{B}] für eine bestimmte Aufprallsituation mit Hilfe der Geschwindigkeitswerte ermittelt wird, die die Clustergrenzen U1, B1, U2, B2 des bei der Klassifizierung für diese Aufprallsituation bestimmten Geschwindigkeitseluster bilden.

5. Verfahren nach einem der Ansprüche 1 bis 4, **dadurch gekennzeichnet, dass** das Beschleunigunssignal aₓ zum Generieren des zeitlichen Verlaufs der Geschwindigkeit Δvₓ integriert und ggf. gewichtet wird.

6. Verfahren nach einem der Ansprüche 1 bi 5, **dadurch gekennzeichnet, dass** das Beschleunigungssignal aₓ zur Ermittlung des Schwellwerts Δvₓₜₕ gefiltert wird und dass zumindest ein Teil der Filterparameter in Abhängigkeit von der jeweiligen Klassifizierung der Aufprallsituation bestimmt wird.

7. Verfahren nach einem der Ansprüche 1 bis 6, **dadurch gekennzeichnet, dass** das Beschleunigunssignal aₓ zur Ermittlung des Schwellwerts Δvₓₜₕ transformiert wird und dass zumindest ein Teil der Transformationsparameter in Abhängigkeit von der jeweiligen Klassifizierung der Aufprallsituation bestimmt wird.

8. Verfahren nach einem der Ansprüche 1 bis 7, **dadurch gekennzeichnet, dass** das Objekt hinsichtlich seiner Masse und seiner Steifigkeit durch Auswertung des Beschleunigungssignals aₓ nach dem Aufprallzeitpunkt t₀ klassifiziert wird und dass diese Objektklassifizierung bei der Bestimmung des Schwellwerts Δvₓₜₕ berücksichtigt wird.

9. Verfahren nach Anspruch 8, **dadurch gekennzeichnet, dass** die Interaktion des Kraftfahrzeugs mit dem Objekt zu Beginn des Aufpralls in Abhängigkeit von der Klassifizierung der Aufprallsituation ausgewertet wird.

10. Verfahren nach Anspruch 9, **dadurch gekennzeichnet, dass** zur Erfassung starker Signalspitzen zu Beginn des Aufpralls eine Kurzzeitintegration des Beschleunigungssignals aₓ nach dem Aufprallzeitpunkt t₀ durchgeführt und ausgewertet wird.

11. Verfahren nach einem der Ansprüche 9 oder 10, **dadurch gekennzeichnet, dass** der Signalanstieg nach dem Aufprallzeitpunkt t₀ ausgewertet wird.

12. Verfahren nach einem der Ansprüche 8 bis 11, **dadurch gekennzeichnet, dass** Bruchvorgänge im Kraftfahrzeug und Änderungen der Barrierenhärte im Verlauf des Aufpralls über hochfrequente Schwingungen im Beschleunigunssignal aₓ erfasst und in Abhängigkeit von der Klassifizierung der Aufprallsituation ausgewertet werden.

13. Verfahren nach Anspruch 12, **dadurch gekennzeichnet, dass** die hochfrequenten Schwingungen im Beschleunigungssignal aₓ mit Hilfe eines Hochpassfilters erfasst werden und dass die Auswertung über Spitzenwerte erfolgt.

14. Verfahren nach einem des Ansprüche 1 bis 13, **dadurch gekennzeichnet, dass** da Beschleunigungssignal aₓ bis zum Aufprallzeitpunkt t₀ ausgewertet wird, um eine etwaige Vorverlagerung der Fahrzeuginsassen vor dem Aufprall zu erkennen und bei der Auslösung der Rückhaltemittel zu berücksichtigen.

15. Verfahren nach Anspruch 14, **dadurch gekennzeichnet, dass** das Beschleunigungssignal aₓ zur Erkennung einer etwaigen Vorverlagerung zweifach integriert wird und dass die so gewonnenen Informationen mit weiteren Insassenparametern, wie der Sitzposition, der Lenkradeinstellung und/oder dem Insassengewicht, kombiniert werden.

## Claims

1. Method for triggering means of restraint in a motor vehicle in the case of an impact or a collision with an object,
- wherein the time profile of the acceleration is sensed in the form of at least one acceleration signal aₓ,
- wherein the time profile of a velocity Δvₓ is generated from the acceleration signal aₓ,
- wherein a threshold value Δvₓₜₕ for the velocity Δvₓ is determined as a triggering criterion,
- wherein the impact situation is classified,
- wherein the threshold value Δvₓₜₕ for the velocity Δvₓ is determined from the acceleration signal aₓ, wherein the classification of the impact situation is taken into account,
**characterized**
- **in that** the impact velocity v_{close} and the impact time t₀ are already determined before the impact using a precrash sensor system,
- **in that** the impact situation is classified by reference to the impact velocity v_{close}, and
- **in that** a triggering time window [t_{A}...t_{B}] in which the time profile of the velocity Δvₓ is generated is determined in parallel with the determination of the threshold value Δvₓₜₕ and using the classification of the impact situation.

2. Method according to Claim 1, **characterized in that** the maximum required means of restraint are determined using the classification of the impact situation.

3. Method according to one of Claims 1 or 2 for two-stage means of restraint, **characterized in that** the impact velocity v_{close} is assigned, within the scope of the classification of the impact situation, to what is referred to as a velocity cluster which is defined as a velocity range in which, for all the impact situations which are considered,
- either no means of restraint is necessary (Cluster C0)
- or in the state in which a seat belt is not being worn the first stage of the means of restraint is necessary for some of the possible impact situations, while in the state in which a seat belt is being worn no means of restraint is necessary yet (Cluster C1),
- or in the state in which a seat belt is being worn the first stage of the means of restraint is necessary for some of the possible impact situations, while the second stage of the means of restraint is necessary neither in the state in which a seat belt is not being worn nor in the state in which a seat belt is being worn (Cluster C2),
- or in the state in which a seat belt is not being worn the first and second stages of the means of restraint are necessary for some of the possible impact situations, while the second stage of the means of restraint is not necessary in the state in which a seat belt is being worn (Cluster C3),
- or the first and second stages of the means of restraint are necessary both in the state in which a seat belt is not being worn and in the state in which a seat belt is being worn (belted B2) for some of the possible impact situations (Cluster C4).

4. Method according to Claim 3, **characterized in that** the triggering time window [t_{A}...t_{B}] is determined for a specific impact situation using the velocity values which form the cluster limits U1, B1, U2, B2 of the velocity cluster which is determined during the classification for this impact situation.

5. Method according to one of Claims 1 to 4, **characterized in that** the acceleration signal aₓ is integrated and possibly weighted in order to generate the time profile of the velocity Δvₓ.

6. Method according to one of Claims 1 to 5, **characterized in that** the acceleration signal aₓ is filtered in order to determine the threshold value Δvₓₜₕ, and **in that** at least some of the filter parameters are determined as a function of the respective classification of the impact situation.

7. Method according to one of Claims 1 to 6, **characterized in that** the acceleration signal aₓ is transformed in order to determine the threshold value Δvₓₜₕ, and **in that** at least some of the transformation parameters are determined as a function of the respective classification of the impact situation.

8. Method according to one of Claims 1 to 7, **characterized in that** the object is classified in terms of its mass and its rigidity by evaluating the acceleration signal aₓ after the impact time t₀, and **in that** this object classification is taken into account during the determination of the threshold value Δvₓₜₕ.

9. Method according to Claim 8, **characterized in that** the interaction of the motor vehicle with the object at the start of the impact is evaluated as a function of the classification of the impact situation.

10. Method according to Claim 9, **characterized in that**, in order to sense pronounced signal peaks at the start of the impact, a short-term integration of the acceleration signal aₓ after the impact time t₀ is carried out and evaluated.

11. Method according to one of Claims 9 or 10, **characterized in that** the rise in the signal is evaluated after the impact time to.

12. Method according to one of Claims 8 to 11, **characterized in that** fracturing processes in the motor vehicle and changes in the barrier hardness in the course of the impact are sensed by means of high-frequency oscillations in the acceleration signal aₓ and are evaluated as a function of the classification of the impact situation.

13. Method according to Claim 12, **characterized in that** the high-frequency oscillations in the acceleration signal aₓ are sensed using a high-pass filter, and **in that** the evaluation is made by means of peak values.

14. Method according to one of Claims 1 to 13, **characterized in that** the acceleration signal aₓ is evaluated up to the impact.time t₀ in order to detect any forward displacement of the vehicle occupants before the impact and to take it into account in the triggering of the means of restraint.

15. Method according to Claim 14, **characterized in that** the acceleration signal aₓ is integrated twice in order to detect any forward displacement, and **in that** the information which is acquired in this way is combined with further vehicle occupant parameters such as the seat position, the setting of the steering wheel and/or the weight of the vehicle occupant or occupants.

## Revendications

1. Procédé de déclenchement de moyens de retenue dans un véhicule automobile en cas de choc ou de collision avec un objet, selon lequel
- on saisit l'évolution chronologique de l'accélération sous la forme d'au moins un signal d'accélération (aₓ),
- à partir du signal d'accélération (aₓ) on génère l'évolution chronologique d'une vitesse (Δvₓ),
- comme critère de déclenchement on détermine un seuil (Δvₓₜₕ) de la vitesse (Δvₓ),
- on classe la situation de choc,
- à partir du signal d'accélération (aₓ) on détermine le seuil (Δvₓₜₕ) de la vitesse (Δvₓ), en tenant compte du classement de la situation de collision,
**caractérisé en ce qu'**
- à l'aide de capteurs de pré-collision, déjà avant la collision on détermine la vitesse de choc (v_{close}) et l'instant du choc (t₀),
- on classe la situation de choc à l'aide de la vitesse de choc (v_{close}) et
- à l'aide du classement de la situation de choc, en parallèle à la détermination du seuil (Δvₓₜₕ), on détermine une fenêtre de déclenchement [t_{A}...t_{B}] dans laquelle on génère l'évolution chronologique de la vitesse (Δvₓ).

2. Procédé selon la revendication 1,
**caractérisé en ce qu'**
à l'aide du classement de la situation de choc on détermine les moyens de retenue maximum nécessaires.

3. Procédé selon l'une des revendications 1 ou 2 pour un moyen de retenue à deux niveaux,
**caractérisé en ce qu'**
on associe la vitesse de choc (v_{close}) dans le cadre du classement de la situation de choc à une grille de vitesses définie comme plage de vitesse dans laquelle, pour toutes les situations de chocs envisageables,
- soit il ne faut aucun moyen de retenue (grille C0),
- soit si la ceinture n'est pas attachée pour une partie des situations de choc considérées, il faut appliquer le premier niveau de moyens de retenue alors que si la ceinture est attachée il ne faut pas encore de moyen de retenue (grille C1),
- soit si la ceinture est attachée pour une partie des situations de choc envisageables, il faut appliquer le premier niveau de moyens de retenue alors que le second niveau de moyens de retenue n'est pas nécessaire, que la ceinture soit ou non attachée (grille C2),
- soit si la ceinture n'est pas attachée, pour une partie des situations de choc envisageables, il faut appliquer le premier et le second niveau de moyens de retenue alors que le second niveau de moyens de retenue n'est pas nécessaire lorsque la ceinture est attachée (grille C3),
- soit la ceinture est ou n'est pas attachée (B2) pour une partie des situations de choc envisageables, il faut appliquer le premier et le second niveau de moyens de retenue (grille C4).

4. Procédé selon la revendication 3,
**caractérisé en ce qu'**
on détermine la fenêtre de temps de déclenchement [t_{A}...t_{B}] pour une situation de choc définie à l'aide des valeurs de la vitesse qui forment les limites (U1, B1, U2, B2) de la grille des vitesses, déterminées pour le classement de cette situation de choc.

5. Procédé selon l'une des revendications 1 à 4,
**caractérisé en ce qu'**
on intègre ou le cas échéant on pondère le signal d'accélération (aₓ) pour générer l'évolution dans le temps de la vitesse (Δvₓ).

6. Procédé selon l'une des revendications 1 à 5,
**caractérisé en ce qu'**
on filtre le signal d'accélération (aₓ) pour déterminer le seuil (Δvₓₜₕ) et on détermine au moins une partie des paramètres de filtre en fonction du classement respectif de la situation de choc.

7. Procédé selon l'une des revendications 1 à 6,
**caractérisé en ce qu'**
on transforme le signal d'accélération (aₓ) pour déterminer le seuil (Δvₓₜₕ) et on détermine au moins une partie des paramètres de transformation en fonction du classement respectif de la situation de choc.

8. Procédé selon l'une des revendications 1 à 7,
**caractérisé en ce qu'**
on classe l'objet quant à sa masse et à sa rigidité par l'exploitation du signal d'accélération (aₓ) après l'instant de choc (t₀) et on tient compte de ce classement d'objet pour déterminer le seuil (Δvₓₜₕ).

9. Procédé selon la revendication 8,
**caractérisé en ce qu'**
on exploite l'interaction du véhicule et de l'objet au début du choc en fonction du classement de la situation de choc.

10. Procédé selon la revendication 9,
**caractérisé en ce que**
pour saisir des pointes de signaux d'amplitude plus grande au début du choc, on effectue une intégration brève du signal d'accélération (aₓ) après l'instant de choc (t₀) et on exploite.

11. Procédé selon l'une des revendications 9 ou 10,
**caractérisé en ce qu'**
on exploite la montée du signal après l'instant de choc (t₀).

12. Procédé selon l'une des revendications 8 à 11,
**caractérisé en ce que**
des opérations de rupture dans le véhicule et des variations de la dureté de la barrière au cours du choc sont détectées par des vibrations haute fréquence contenues dans le signal d'accélération (aₓ) et on les exploite suivant le classement de la situation de choc.

13. Procédé selon la revendication 12,
**caractérisé en ce qu'**
on saisit les vibrations à haute fréquence du signal d'accélération (aₓ) à l'aide d'un filtre passe-bas et on fait l'exploitation par les valeurs maximales.

14. Procédé selon l'une des revendications 1 à 13,
**caractérisé en ce qu'**
on exploite le signal d'accélération (aₓ) jusqu'à l'instant du choc (t₀) pour déceler un éventuel décalage vers l'avant des occupants du véhicule avant le choc et pour déclencher les moyens de retenue.

15. Procédé selon la revendication 14,
**caractérisé en ce qu'**
on intègre deux fois le signal d'accélération (aₓ) pour reconnaître un éventuel déplacement vers l'avant et on combine les informations ainsi recueillies à d'autres paramètres d'occupants, tels que la position du siège, le réglage du volant de direction et/ou le poids des occupants.
